# EUROPÄISCHE PATENTSCHRIFT

(11) **EP 1 523 874 B1**
(45) Veröffentlichungstag und Bekanntmachung des Hinweises auf die Patenterteilung: **27.12.2006**
(21) Anmeldenummer: 04104899.2
(22) Anmeldetag: 06.10.2004
(51) Int. Cl.: A01D 41/12

(54) **Messeinrichtung zur Messung von Inhaltsstoffen in Erntegut**
Measuring apparatus for measuring components in crop
Dispositif de mesure des substances contenues dans des récoltes

(30) Priorität: 15.10.2003 DE 10348040
(43) Veröffentlichungstag der Anmeldung: 20.04.2005
(73) Patentinhaber: DEERE & COMPANY, Moline, Illinois 61265-8098 (US)
(72) Erfinder: Kormann, Georg, 66424, Homburg (DE); Flohr, Werner, 67661, Kaiserslautern-Dansenberg (DE)
(74) Vertreter: Holst, Sönke

(56) Entgegenhaltungen:
- EP-A1- 0 843 959
- US-A1- 2001 000 910
- US-A1- 2003 063 276
- US-B1- 6 559 655

## Beschreibung

Die Erfindung betrifft eine Messeinrichtung, die eingerichtet ist, mit einem zu untersuchenden Material zusammenzuwirken und wenigstens einen Inhaltsstoff des Materials zu erfassen, und die mittels einer Halterungseinrichtung an einem Fahrzeug befestigbar ist, sodass die Messeinrichtung in dem in der Halterungseinrichtung befestigten Zustand betreibbar ist, von dem Fahrzeug be- und/oder verarbeitetes Material zu analysieren, wobei die Messeinrichtung von der Halterungseinrichtung trennbar und verwendbar ist, in einem stationären Einsatz Material zu untersuchen.

In der EP 1 053 671 A wird eine Messeinrichtung vorgeschlagen, die an einer landwirtschaftlichen Maschine angebracht ist. Das Erntegut strömt an der Messeinrichtung vorbei und wird durch die Messeinrichtung hinsichtlich bestimmter Eigenschaften untersucht, wie Feuchtigkeitsgehalt oder des Gehalts an organischen Inhaltsstoffen. Es wird vorgeschlagen, die Messeinrichtung innerhalb der Maschine oder an einem Schlitten außerhalb der Maschine anzubringen. Der beschriebene Sensor ist von der Erntemaschine abnehmbar und kann an anderen mobilen Maschinen Verwendung finden.

Die US 2003/0063276 A und die US 6 559 655 A beschreiben Messeinrichtungen zur Erfassung von Inhaltsstoffen von landwirtschaftlichen Produkten, die abnehmbar an einer Maschine angebracht sind, welche die Produkte bearbeitet, z. B. einem Mähdrescher. Die Messeinrichtung kann von der Maschine abgenommen und z. B. für Messungen außerhalb des Mähdreschers verwendet werden.

Die von den Detektoren der Messeinrichtung abgegebenen Signale können in manchen Anwendungsfällen unterschiedlich auszuwerten sein, je nachdem, an welcher Halterungseinrichtung die Messeinrichtung verwendet wird. Mit anderen Worten hängen Kalibrierwerte der Messeinrichtung von ihrer Anbringung ab.

Das der Erfindung zu Grunde liegende Problem wird darin gesehen, die geschilderten Nachteile zu vermeiden.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Um daraus, dass Kalibrierwerte der Messeinrichtung von ihrer Anbringung abhängen, entstehende Fehler zu vermeiden, ohne manuelle Eingaben vornehmen zu müssen, wird der Elektronikeinheit der Messeinrichtung eine Information über die Halterungseinrichtung zugeführt, an der sie befestigt ist. Die Messeinrichtung berücksichtigt die Information über die Art der Halterungseinrichtung, an der sie befestigt ist, bei der Auswertung der Messwerte und/oder bei der Abgabe von Messdaten.

Auf diese Weise kann die Messeinrichtung einerseits am Fahrzeug verwendet werden, von letzterem gefördertes bzw. bearbeitetes Material zu analysieren, andererseits kann sie aber auch vom Fahrzeug abgenommen und zur stationären Analyse andere Materialen genutzt werden. Dieselbe Messeinrichtung kann somit auf jeder Art von Fahrzeug (z. B. Holzerntemaschine, Holzverarbeitungsfahrzeug, selbstfahrende, angebaute oder gezogene Erntemaschinen wie Mähdrescher, Feldhäcksler oder Ballenpresse, Futtermischwagen, Sämaschine, Gülleverteilungssystem) als auch stationär (z. B. im Büro, an einer Fuhrwerkswaage, an einer Getreideannahme oder in Elevatoranlagen oder zur Analyse von täglichen Futterrationen) oder in einem Auto bzw. LKW zur mobilen Kontrolle von Qualitäten eingesetzt werden. Ein Vorteil liegt darin, dass die Messeinrichtung innerhalb eines (insbesondere landwirtschaftlichen) Betriebes weitläufig eingesetzt werden kann. Damit verlängert sich die Einsatzzeit der Messeinrichtung von wenigen Erntewochen auf das gesamte Jahr.

Eine Materialanalyse kann beispielsweise mit einem optischen Sensor durchgeführt werden. Derartige Sensoren arbeiten in der Regel im nahen Infrarotbereich. Die Messeinrichtung kann im Transmissions- und/oder Reflexionsmodus und/oder in einem beliebigen anderen Wellenlängenbereich arbeiten.

Am Fahrzeug wird die Messeinrichtung in einer Halterungseinrichtung befestigt, die es ermöglicht, das zu untersuchende Material in einen Bereich zu bringen, in dem es von der Messeinrichtung untersucht wird; es ist somit eine Vorrichtung zur Probenpräsentation vorhanden. Im vom Fahrzeug getrennten Zustand könnte die Messeinrichtung ohne zusätzliche Halterungseinrichtung verwendet und beispielsweise von Hand in einer Position gehalten werden, in der sie mit dem zu untersuchenden Material zusammenwirkt. Findet jedoch auch dort eine (zweite) Halterungseinrichtung für die Messeinrichtung Verwendung, so ist auch diese zweckmäßigerweise mit einer Vorrichtung zur Probenpräsentation ausgestattet. Die Probe kann sich bei der Messung in einem ruhenden oder einem bewegten Zustand befinden.

In der Zeichnung ist ein nachfolgend näher beschriebenes Ausführungsbeispiel der Erfindung dargestellt. Es zeigt:
- Fig. 1: eine Erntemaschine mit einer Messeinrichtung in Seitenansicht und in schematischer Darstellung,
- Fig. 2: eine vergrößerte Schnittansicht der an der Erntemaschine befestigten Messeinrichtung, und
- Fig. 3: die Messeinrichtung mit einer zweiten Halterungseinrichtung und einem Computer zur Auswertung der Messergebnisse.

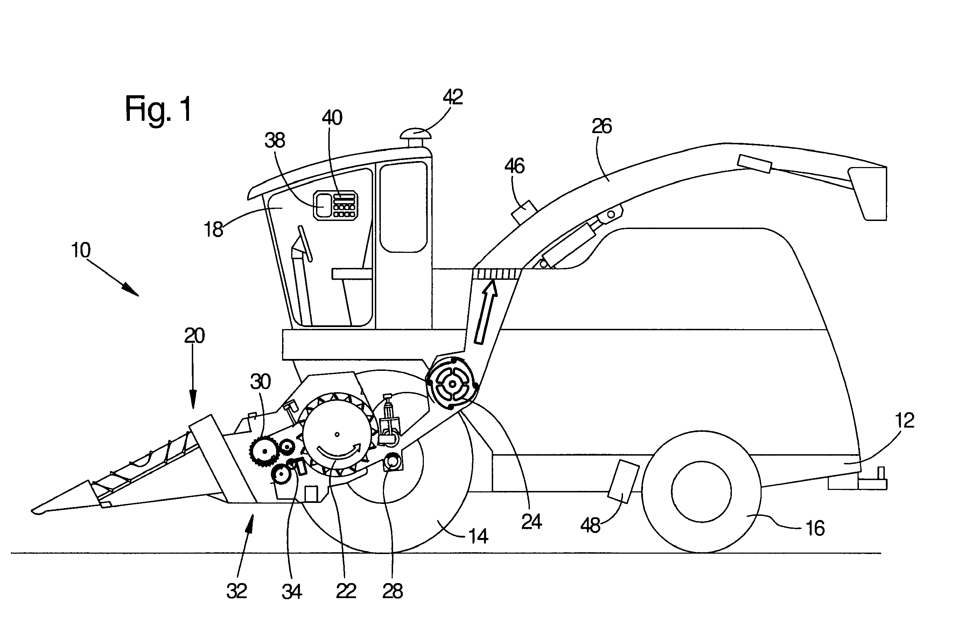

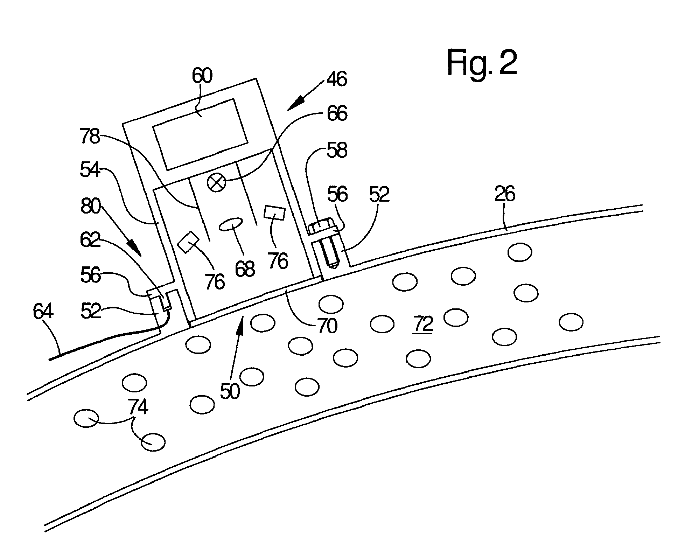

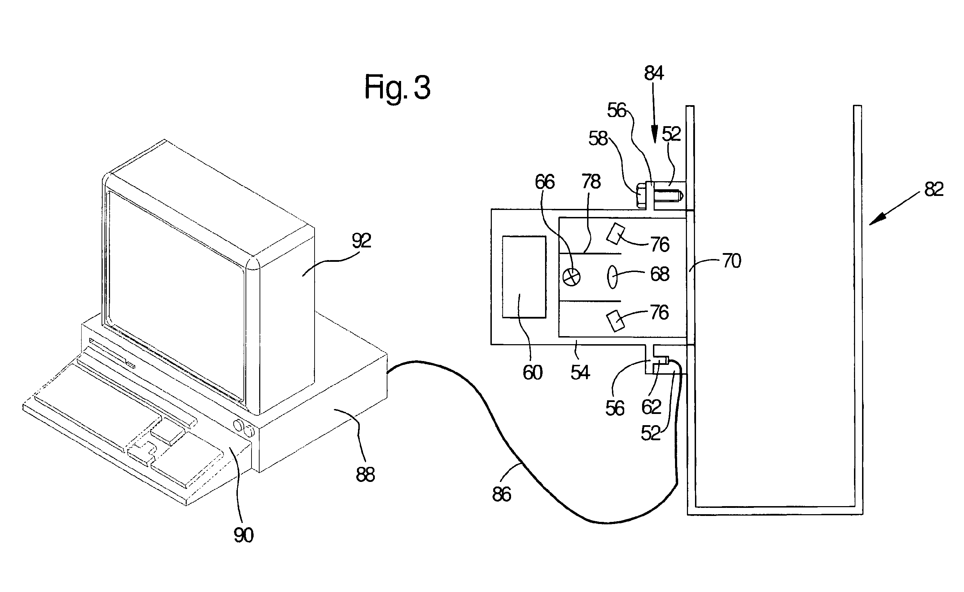

Die dargestellte Ausführungsform der Erfindung wird an einer Erntemaschine 10 (Figur 1 und 2) und an einem stationären Messbehälter (Figur 3) eingesetzt. Die in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20, die in der dargestellten Ausführungsform ein Maisgebiss ist, vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenherfahrenden Anhänger über einen drehbaren Austragsschacht 26. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

An der in Figur 1 dargestellten Erntemaschine 10 sind einige Sensoren zur Messung des Flusses des die Erntemaschine 10 pro Zeiteinheit durchströmenden Erntegutes, des sog. Durchsatzes, vorgesehen. Ein erster Durchsatzsensor 30 misst den Abstand zwischen zwei Vorpresswalzen 32, die zwischen der Erntegutaufnahmevorrichtung 20 und der Häckseltrommel 22 angeordnet sind, und zwischen denen das Erntegut hindurchgefördert wird, mittels eines von der federnd aufgehängten Vorpresswalze 32 betätigten Schiebe- oder Drehwiderstandes (Potentiometer). Weiterhin wird die Drehzahl einer der Vorpresswalzen 32 mittels eines zweiten Sensors 34 gemessen. Außerdem können Sensoren das Antriebsdrehmoment der Fördervorrichtung 24 sowie der Nachzerkleinerungseinrichtung 28 messen.

Ein mit einer Anzeigeeinrichtung 38 verbundener Bordcomputer 40 dient zur Aufzeichnung und Auswertung der gemessenen Daten.

Um einen Ertrag zu errechnen, werden außerdem Informationen über die aktuelle Fahrgeschwindigkeit und Arbeitsbreite benötigt. Die Fahrgeschwindigkeit kann aus den Daten der Vortriebseinrichtungen der Erntemaschine 10 entnommen oder über einen Radarsensor 48 erfasst werden. Mittels eines GPS- (Global Positioning System) Sensors 42 zur Erfassung der aktuellen Position kann der Ertrag mittels des Bordcomputers 40 teilflächenspezifisch kartiert werden.

Erfindungsgemäß ist eine Messeinrichtung 46 zur Messung bestimmter Inhaltsstoffe des Erntegutes vorgesehen. Sie bestimmt den prozentualen Anteil dieser Inhaltsstoffe im Erntegut und arbeitet optisch im Reflexionsbetrieb im sichtbaren Bereich und/oder nahen Infrarotbereich. Am Bordcomputer 40 können damit Wasser-, Rohprotein-, Fettgehalt etc. des Erntegutes georeferenziert abgespeichert und durch die Anzeigeeinrichtung 38 angezeigt werden. Die Messeinrichtung 46 ist außerdem eingerichtet, weitere Parameter des Erntegutes zu erfassen, nämlich die Faserlänge, den Fasergehalt und den Gehalt an Trockensubstanz.

Die Anbringung der Messeinrichtung 46 am Austragsschacht 26 ist in der Figur 2 detaillierter dargestellt. Die flache, sich quer zur Fahrtrichtung erstreckende Wand des Austragsschachts 26 ist an ihrer Oberseite mit einer insbesondere kreisförmigen oder rechteckigen Öffnung 50 versehen, um die herum sich an der Außenseite der Wand ein Flansch 52 erstreckt. Der Flansch 52 ist mit der Wand verschraubt, verschweißt oder anderweitig daran befestigt. Die Messeinrichtung 46 weist ein zylindrisches Gehäuse 54 auf, das sich in den Innenraum des Flansches 52 erstreckt. An der Außenseite des Gehäuses 54 ist ein weiterer, mit dem Gehäuse 54 fest verbundener Flansch 56 vorhanden, der auf dem mit der Wand des Austragschachts 26 verbundenen Flansch 52 aufliegt. Eine Schraubverbindung 58 haltert den Flansch 56 des Gehäuses 54 am Flansch 52 der Wand. Anstelle einer Schraubverbindung 58 könnte eine beliebige andere, möglichst schnell und einfach lös- und anbringbare Verbindung gewählt werden.

Innerhalb des Gehäuses 54 befindet sich an dessen oberem Ende eine Elektronikeinheit 60, die Schaltelemente zur Stromversorgung der Messeinrichtung 46, zur Datenübertragung über ein Bussystem 64 und zur Auswertung der Messwerte umfasst. Die Elektronikeinheit 60 ist über eine trennbare elektrische Steckverbindung 62 mit dem Bussystem 64 der Erntemaschine 10 verbunden, an dem auch der Bordcomputer 40 angeschlossen ist. Das Bussystem arbeitet in der Regel nach einem Standard, wie CAN ISO 11783. Die Messeinrichtung 46 meldet sich bei der Anzeigeeinrichtung 38 mit einer eigenen Seite an oder alternativ nur mit Werten, die auf einer anderen Seite angezeigt werden.

Innerhalb des Gehäuses 54 befindet sich weiterhin eine Lichtquelle 66, die mittels eines Kollimators 68 Licht nach unten abstrahlt. Das Licht tritt durch eine lichtdurchlässige Scheibe 70 an der Unterseite des Gehäuses 54 und in den Förderkanal 72 im Austragschacht 26 ein, durch den Erntegut 74 gefördert wird. Vom Erntegut 74 reflektiertes Licht fällt auf Detektoren 76, die durch einen lichtundurchlässigen Tubus 78 von der Lichtquelle 66 abgeschirmt sind. Die Detektoren 76 sind in der Lage, wellenlängenspezifisch die Reflektivität des Ernteguts 74 zu erfassen, sind also als Spektrometer aufgebaut. Dazu können in an sich bekannter Weise Filter, Gitter oder dispersive Elemente verwendet werden. Aus den von den Detektoren 76 bereitgestellten Messwerten berechnet die Elektronikeinheit 60 den Gehalt des Ernteguts 74 an bestimmten Inhaltsstoffen, wie Wasser, Stärke, enzymlöslichen organischen Substanzen, nichtorganischen Mineralstoffen, Rohprotein, Öl und dergleichen. Die Messwerte werden über das Bussystem 64 an den Bordcomputer 40 übertragen, der sie ortsabhängig kartiert, und an die Anzeigeeinrichtung 38, auf der sie zur Anzeige gebracht werden können.

Der Flansch 52 und die Schraubverbindung 58 bilden gemeinsam mit der Steckverbindung 62 eine erste lösbare Halterungseinrichtung 80 für die Messeinrichtung 46. Nach Lösen der Schraubverbindung 58 kann die Messeinrichtung 46 ohne weitere Maßnahmen vom Austragsschacht 26 abgenommen werden. Soll die Erntemaschine 10 ohne Messeinrichtung 46 betrieben werden, wird die Öffnung 50 vorzugsweise mit einem Blindflansch verschlossen.

Die in den Figuren 1 und 2 dargestellte Messeinrichtung 46 kann, wie in Figur 3 wiedergegeben, auch an einer beliebigen anderen Stelle verwendet werden. In Figur 3 ist sie an einem stationären oder tragbaren Behälter 82 angebracht, bei dem es sich um ein Probenaufnahmegefäß handelt. Der zylindrische Behälter 82 ist an seiner Seitenwand mit einer Halterungseinrichtung 84 versehen, an der die Messeinrichtung 46 befestigt ist. Die Halterungseinrichtung 84 entspricht in ihrem Aufbau der Halterungseinrichtung 80 aus Figur 2. Die Messeinrichtung 46 ist über die Steckverbindung und ein Kabel 86 (und in der Regel eine geeignete Schnittstelle) mit einem Computer 88 verbunden, der außerdem mit einer Tastatur 90 und einem Monitor 92 verbunden ist.

Auf diese Weise wird erreicht, dass die Messeinrichtung 46 während der Erntezeit an der Erntemaschine 10 verwendet werden kann, um den Gehalt des Ernteguts 74 an verschiedenen Inhaltsstoffen zu erfassen. Die technisch aufwändige und teure Messeinrichtung 46 kann bei Nichtbenutzung, z. B. nachts, leicht von der Erntemaschine 10 abgenommen werden, auch um sie vor Witterungseinflüssen geschützt an einem sicheren Ort unterzubringen. Sie kann außerdem an den Behälter 82 angebracht werden. In den Behälter eingefüllte Proben, beispielsweise bestehend aus Erntegut beliebiger Art, können durch dieselbe Messeinrichtung 46 untersucht werden. Das Messergebnis wird auf dem Monitor 92 angezeigt und im Computer 88 auf einem Speichermedium abgespeichert. Es wäre auch denkbar, die Messeinrichtung 46 selbst mit einer Eingabe- und Anzeigeeinrichtung zu versehen, um sie als Einzelgerät unabhängig von anderen Geräten betreiben zu können. Die Eingabe- und Anzeigeeinrichtung kann abnehmbar und an der Steckverbindung 62 anschließbar sein. Über sie erfolgt dann auch die Stromversorgung über Netz, Batterien oder Akku.

Die von den Detektoren 76 abgegebenen Signale können in manchen Anwendungsfällen unterschiedlich auszuwerten sein, je nachdem, an welcher Halterungseinrichtung die Messeinrichtung 46 verwendet wird. Mit anderen Worten hängen Kalibrierwerte der Messeinrichtung 46 von ihrer Anbringung ab. Um daraus entstehende Fehler zu vermeiden, ohne manuelle Eingaben vornehmen zu müssen, wird der Elektronikeinheit 60 der Messeinrichtung 46 in einer bevorzugten Ausführungsform der Erfindung eine Information über die Halterungseinrichtung 80 bzw. 84, an der sich die Messeinrichtung 46 jeweils befindet, zugeführt. Diese Information kann aus Daten bestehen, die über das Bussystem 64 bzw. das Kabel 86 übersandt werden. Bei anderen Ausführungsformen wird diese Information durch Elemente an den Flanschen 52 übertragen, die durch Sensoren der Messeinrichtung 46 erfasst werden, beispielsweise optisch, mechanisch oder magnetisch. Die Messeinrichtung 46 könnte alternativ anhand der anderen am Bussystem 64 angeschlossenen Teilnehmer erkennen, ob sie sich auf der Erntemaschine 10 befindet oder ob er im Einzelbetrieb (Figur 3) verwendet wird. Das Bussystem 64 erlaubt auch eine Diagnose der Messeinrichtung 46.

Weiterhin kann auch die Form der Daten, die die Messeinrichtung 46 abgibt, davon abhängen, ob sie auf der Erntemaschine 10 oder stationär eingesetzt wird. So können unterschiedliche Protokolle zur Datenübertragung verwendet werden oder andere Datenformate. Die Information, in welcher Form die Daten übertragen werden, hängt daher zweckmäßigerweise in der oben beschriebenen Weise von der Information über die Halterungseinrichtung 80 bzw. 84, an der sich die Messeinrichtung 46 jeweils befindet, ab.

## Patentansprüche

1. Messeinrichtung (46), die eingerichtet ist, mit einem zu untersuchenden Material zusammenzuwirken und wenigstens einen Inhaltsstoff des Materials zu erfassen, und die mittels einer Halterungseinrichtung (80) an einem Fahrzeug befestigbar ist, sodass die Messeinrichtung (46) in dem in der Halterungseinrichtung (80) befestigten Zustand betreibbar ist, von dem Fahrzeug be- und/oder verarbeitetes Material zu analysieren, wobei die Messeinrichtung (46) von der Halterungseinrichtung (80) trennbar und verwendbar ist, in einem stationären Einsatz Material zu untersuchen, **dadurch gekennzeichnet, dass** der Messeinrichtung (46) eine Information über die Art der Halterungseinrichtung (80, 84), an der sie befestigt ist, zugeführt wird, und dass die Messeinrichtung (46) die Information über die Art der Halterungseinrichtung (80, 84), an der sie befestigt ist, bei der Auswertung der Messwerte und/oder bei der Abgabe von Messdaten berücksichtigt.

2. Messeinrichtung (46) nach Anspruch 1, **dadurch gekennzeichnet, dass** sie einen optischen Sensor umfasst, der vorzugsweise im Nahinfrarotbereich arbeitet.

3. Messeinrichtung (46) nach Anspruch 1 oder 2, **dadurch gekennzeichnet, dass** die Halterungseinrichtung (80) des Fahrzeugs und/oder eine zweite, vom Fahrzeug getrennte Halterungseinrichtung (84) mit einer Vorrichtung zur Probenpräsentation für die Messeinrichtung (46) versehen ist bzw. sind.

4. Messeinrichtung (46) nach einem der Ansprüche 1 bis 3, **dadurch gekennzeichnet, dass** die Messeinrichtung (46) mit einem Bussystem (64) des Fahrzeugs verbindbar ist.

5. Messeinrichtung (46) nach Anspruch 4, **dadurch gekennzeichnet, dass** die Messeinrichtung (46) über eine lösbare Steckverbindung (62) mit dem Bussystem (64) des Fahrzeugs verbindbar ist.

6. Messeinrichtung (46) nach einem der vorhergehenden Ansprüche, **dadurch gekennzeichnet, dass** sie mit einer Anzeigeeinrichtung (38) des Fahrzeugs verbindbar ist, auf der ihre Messwerte anzeigbar sind.

## Claims

1. Measuring apparatus (46) which is arranged to cooperate with a material which is to be examined and to detect at least one component of the material, and which can be fastened to a vehicle by means of a retaining arrangement (80), so that the measuring apparatus (46) can be operated in the state in which it is fastened in the retaining arrangement (80) in order to analyse material handled and/or processed by the vehicle, the measuring apparatus (46) being able to be separated from the retaining arrangement (80) and used to examine material in a stationary application, **characterised in that** information about the type of retaining arrangement (80, 84) to which it is fastened is supplied to the measuring apparatus (46) and **in that** the measuring apparatus (46) takes into consideration the information about the type of retaining arrangement (80, 84) to which it is fastened in the evaluation of the measurement values and/or in the delivery of measurement data.

2. Measuring apparatus (46) according to claim 1, **characterised in that** it includes an optical sensor which preferably operates in the near infra-red region.

3. Measuring apparatus (46) according to claim 1 or 2, **characterised in that** the retaining arrangement (80) of the vehicle and/or a second retaining arrangement (84), separated from the vehicle, is or are provided with a device for sample presentation for the measuring apparatus (46).

4. Measuring apparatus (46) according to one of claims 1 to 3, **characterised in that** the measuring apparatus (46) can be connected to a bus system (64) of the vehicle.

5. Measuring apparatus (46) according to claim 4, **characterised in that** the measuring apparatus (46) can be connected to the bus system (64) of the vehicle via a detachable plug-in connection (62).

6. Measuring apparatus (46) according to one of the preceding claims, **characterised in that** it can be connected to a display device (38) of the vehicle on which its measurement values can be displayed.

## Revendications

1. Dispositif de mesure (46), qui est réglé, de manière à coopérer avec une matière à examiner et à recenser au moins un composant de la matière, et qui peut être fixé à un véhicule au moyen d'un dispositif de fixation (80) de telle sorte que le dispositif de mesure (46) puisse être actionné lorsqu'il est à l'état fixé dans le dispositif de fixation (80), pour analyser la matière travaillée et/ou traitée par le véhicule, le dispositif de mesure (46) pouvant être séparé du dispositif de fixation (80) et utilisé pour examiner de la matière lors d'une utilisation stationnaire, **caractérisé en ce que** le dispositif de mesure (46) reçoit une information sur le type de dispositif de fixation (80, 84) auquel il est fixé, et **en ce que** le dispositif de mesure (46) prend en compte l'information sur le type de dispositif de fixation (80, 84), auquel il est fixé, lors de l'analyse des valeurs de mesure et/ou lors de l'émission de données de mesure.

2. Dispositif de mesure (46) selon la revendication 1, **caractérisé en ce qu'**il comporte un capteur optique qui fonctionne de préférence dans la zone infrarouge proche.

3. Dispositif de mesure (46) selon la revendication 1 ou 2, **caractérisé en ce que** le dispositif de fixation (80) du véhicule et/ou un second dispositif de fixation (84) séparé du véhicule est/sont muni(s) d'un appareil pour la présentation des échantillons pour le dispositif de mesure (46).

4. Dispositif de mesure (46) selon l'une quelconque des revendications 1 à 3, **caractérisé en ce que** le dispositif de mesure (46) peut être relié à un système de bus (64) du véhicule.

5. Dispositif de mesure (46) selon la revendication 4, **caractérisé en ce que** le dispositif de mesure (46) peut être relié, par le biais d'une connexion par fiche détachable (62), au système de bus (64) du véhicule.

6. Dispositif de mesure (46) selon l'une quelconque des revendications précédentes, **caractérisé en ce qu'**il peut être relié à un dispositif d'affichage (38) du véhicule sur lequel ses valeurs de mesure peuvent être affichées.
